Europäisches Patentamt

European Patent Office

Office européen des brevets

(19)

(11) Numéro de publication: **0 054 160**
**B1**

(12) **FASCICULE DE BREVET EUROPEEN**

(45) Date de publication du fascicule du brevet: **27.06.84**

(51) Int. Cl.³: **A 47 J 37/06**

(21) Numéro de dépôt: **81109107.3**

(22) Date de dépôt: **28.10.81**

(54) **Appareil électrique de cuisson.**

(30) Priorité: **12.12.80 FR 8026445**

(43) Date de publication de la demande:
**23.06.82 Bulletin 82/25**

(45) Mention de la délivrance du brevet:
**27.06.84 Bulletin 84/26**

(84) Etats contractants désignés:
**AT BE CH DE IT LI NL SE**

(56) Documents cités:
**CH - A - 609 854**
**DE - A - 2 701 502**
**DE - A - 2 702 901**
**DE - A - 2 739 170**
**DE - U - 7 703 541**
**GB - A - 974 759**

(73) Titulaire: **MOULINEX S.A.**
**7 à 15, rue Jules-Ferry**
**F-93170 Bagnolet (FR)**

(72) Inventeur: **Beaugrand, Jean-Louis**
**65, rue de Romainville**
**F-75019 Paris (FR)**

(74) Mandataire: **May, Hans Ulrich**
**Thierschstrasse 27**
**D-8000 München 22 (DE)**

Courier Press, Leamington Spa, England.

EP 0 054 160 B1

## Description

L'invention se rapporte aux appareils électriques de cuisson.

Elle concerne, plus précisément, les appareils de cuisson qui comprennent, d'une part, une série de poêlons formés chacun d'une coupelle munie d'un manche et, d'autre part, un boîtier comportant deux étages de cuisson formés de deux plateaux horizontaux superposés espacés, entre lesquels est disposée une résistance chauffante à gaine tubulaire métallique s'étendant dans un plan horizontal, le plateau inférieur étant monté fixe sur le boîtier et étant adapté à recevoir lesdits poêlons et position telle que leurs manches fassent saillie du bord périphérique de ce plateau inférieur et que leurs coupelles soient disposées sous ladite résistance, tandis que le plateau supérieur est monté amovible sur l'appareil et présente des faces supérieure et inférieure lisses, la gaine tubulaire de la résistance étant maintenue dans ledit plan horizontal par des supports fixés au plateau inférieur.

Un appareil de ce genre est décrit dans le brevet CH—A—609 854.

On sait que ces appareils sont utilisés pour la préparation du fromage fondu, dit "raclette". A cet effet, des portions de fromage sont placées dans les poêlons sur l'étage inférieur, tandis que des pommes de terre cuites destinées à accompagner usuellement ce mets peuvent être disposées sur l'étage supérieur en vue de leur maintien au chaud.

L'invention a notamment pour but d'assurer une bonne cuisson de la raclette dans les poêlons. Elle a aussi pour but de donner à ces appareils des fonctions supplémentaires, et, en particulier, de leur permettre la préparation des crêpes.

Selon l'invention, les supports de la résistance sont formés par une série de cloisons qui s'étendent, en hauteur, pratiquement sur tout l'espace entre les deux plateaux et, en longueur, de la région centrale des plateaux jusqu'au voisinage des bords périphériques de ces plateaux, formant ainsi entre elles des alvéoles destinées à recevoir les coupelles des poêlons et assurant un contact thermique direct entre la gaine tubulaire de la résistance et la face inférieure de plateau supérieur.

Ainsi, pendant la cuisson de la raclette, chaque alvéole assure, à la manière d'un four, une bonne uniformité de température en tous points de la coupelle du poêlon et du plateau supérieur.

Les caractéristiques et avantages de l'invention ressortiront d'ailleurs de la description qui va suivre, à titre d'exemple, en référence aux dessins annexés dans lesquels:

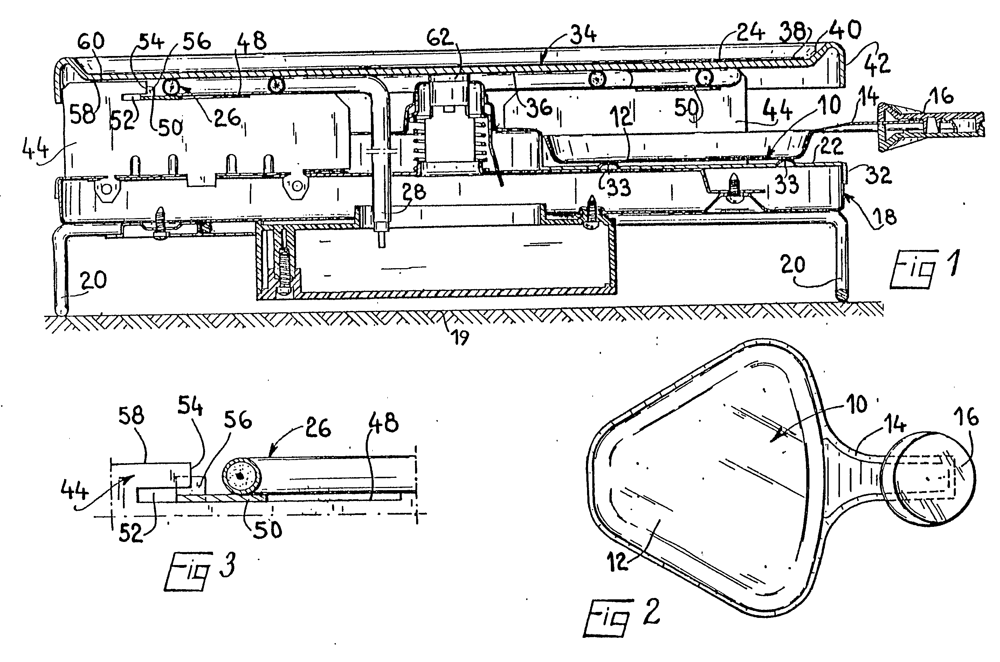

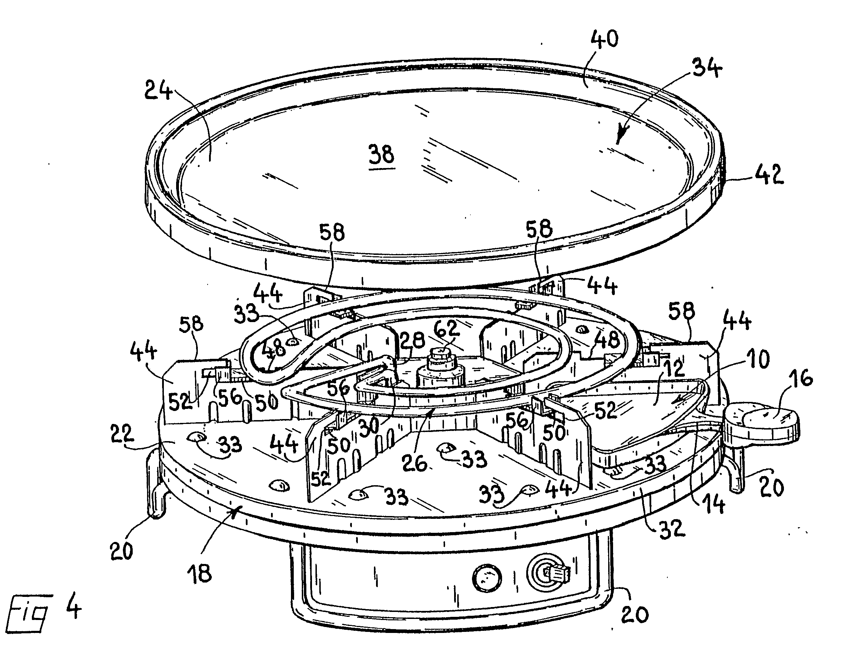

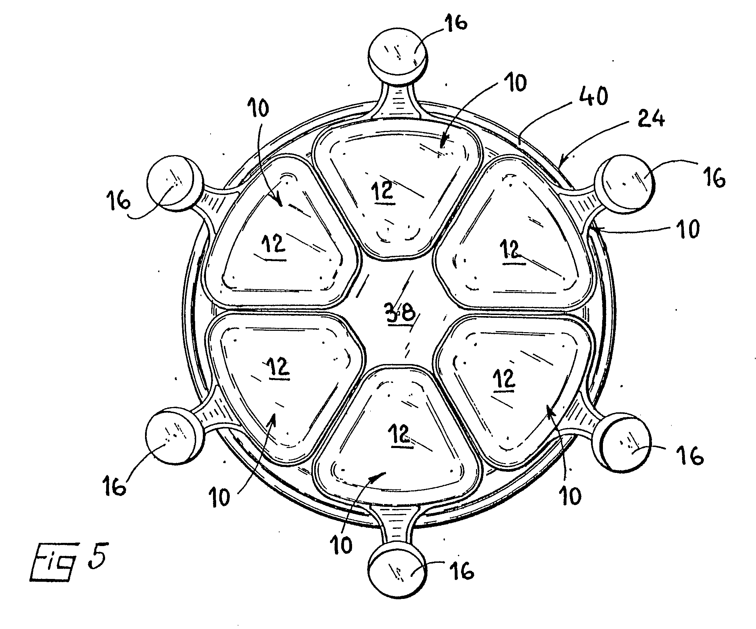

la figure 1 est une coupe verticale d'un appareil de cuisson selon l'invention, avec représentation d'un seul des poêlons dans un but de simplification; la figure 2 est une vue de dessus de l'un des poêlons; la figure 3 représente, à plus grande échelle, et en coupe verticale, un organe de fixation de la résistance dans l'appareil; la figure 4 représente, à échelle plus petite que celle de la figure 1, l'appareil en perspective avec le plateau supérieur soulevé; la figure 5 représente l'appareil en vue de dessus, avec les poêlons posés sur le plateau supérieur.

L'appareil de cuisson représenté comprend, d'une part, une série de six poêlons 10 formés chacun d'une coupelle métallique 12 munie d'un manche 14 portant une poignée 16 en matériau isolant thermique.

Il comprend, d'autre part, un boîtier 18 qui est adapté à reposer sur un plan de travail, tel que le dessus d'une table 19, au moyen de pieds 20. Ce boîtier comporte deux étages de cuisson formés de deux plateaux 22 et 24 horizontaux superposés espacés, entre lesquels est disposée une résistance chauffante 26 à gaine tubulaire métallique qui, à partir de deux brins d'extrémités verticaux 28, 30 implantés dans la région centrale du plateau 22, s'étend dans un plan horizontal selon un parcours en forme de boucle comprenant deux spires pratiquement concentriques.

Le plateau inférieur 22 est monté sur le boîtier et est adapté à recevoir les poêlons 10 en position telle que leurs manches 14 fassent saillie du bord périphérique 32 de ce plateau et que leurs coupelles 12 soient disposées sous la résistance 26 (fig. 1 et 4). On notera que chaque coupelle repose alors sur les sommets de trois bossages espacés 33 pratiqués sur le plateau 22: cette disposition évite un trop grande échange thermique entre les coupelles et le plateau 22, dont pourrait résulter un chauffage insuffisant de ces coupelles.

Le plateau supérieur 24 est monté amovible sur l'appareil, comme le montre la figure 4.

Comme on le voit sur les figures 4 et 5, les plateaux 22 et 24 sont circulaires, et les coupelles 12 des poêlons 10 présentent la forme générale de trapèzes s'inscrivant respectivement dans six secteurs égaux d'un même cercle.

Le plateau supérieur 24 présente des faces supérieure 34 en inférieure 36 lisses, et sa face inférieure 36 est en contact thermique direct avec la gaine tubulaire de la résistance 26. La face supérieure 34 comprend une zone centrale circulaire plane 38 entourée d'un bord périphérique relevé 40 portant une jupe descendante 42. On notera que la zone central 38 est sensiblement de même diamètre que le cercle dans lequel s'inscrivent les coupelles 12.

Dans le but d'assurer un bon contact thermique entre la gaine de la résistance et la face inférieure 36 du plateau 24, ladite gaine est maintenue dans un plan horizontal par une série de six supports 44 fixés au plateau inférieur 22. Ces supports 44 sont formés par des cloisons métalliques qui sont disposées radialement au boîtier, et donc transversalement aux spires de la résistance 26, et qui s'étendent, en hauteur, pratiquement sur tout l'espace entre les deux plateaux 22 et 24 et, en longueur, depuis la région centrale des plateaux jusqu'au voisinage des bords périphériques 32 et 40 de ces plateaux, formant ainsi entre elles six alvéoles destinées à recevoir respectivement les coupelles 12 des poêlons 10. Chaque cloison 44 présente dans son bord supérieur une large échancrure 48 qui reçoit la gaine de la résistance 26. Cette échancrure présente la forme générale d'un L dont la ligne inférieure se prolonge jusqu'à la région centrale du boîtier. Ainsi, chaque spire de la résistance 26 prend appui sur les fonds des échancrures 48, c'est-à-dire sur plusieurs points situés dans un même plan horizontal. En vue de maintenir cette résistance dans ledit plan horizontal, tout en tolérant des déformations de cette résistance dans le sens radiale causées par les dilatations résultant de son chauffage, on a équipé la résistance de pattes de maintien spécialement prévues à cet effet. Ces pattes 50, soudées à la région inférieure de la gaine de la spire externe de la résistance, sont disposées horizontalement et sont engagées chacune dans une encoche 52 orientée horizontalement pratiquée dans le bord vertical 54 de l'échancrure 48. Comme on le voit bien sur la figure 3, il existe, à froid, un jeu important dans le sens horizontal entre le bord externe de la patte 50 et le fond de l'encoche 52, alors qu'en revanche le jeu est faible dans le sens vertical entre cette patte et l'encoche. Pour empêcher les pattes 50 de se libérer de leurs encoches de maintien 52, par exemple pendant le transport ou le stockage de l'appareil, on a muni chaque patte 50 d'une paire d'ailettes latérales 56 placées de part et d'autre de le cloison 44. On notera que la profondeur de l'échancrure 48, dans la région de passage de chaque spire de la résistance, est telle que la crête de cette résistance est, sur tout le parcours des deux spires, située dans un même plan horizontal, légèrement au dessus du plan horizontal passant par les régions non échancrées 58 des bords supérieurs des cloisons 44. Ainsi le plateau supérieur 24 prend appui directement sur la crête des spires de la résistance, avec un léger espace 60 (fig. 1) entre les régions 58 des cloisons 44 et la face inférieure 36 de ce plateau.

L'appareil comport en outre un thermostat de limitation de température monté en série avec la résistance 26 et comportant un palpeur 62 qui est en contact élastique avec la région centrale de la face inférieure 36 du plateau 24, ceci afin d'éviter que ce plateau 24 ne soit porté à une température excessive.

Sur la figure 1, l'appareil est représenté en position d'utilisation. Pour préparer de la râclette, on place sur le plateau inférieur 22, dans les alvéoles formées entre les cloisons 44, les poêlons 10 garnis de portions de fromage; on notera que, pendant la cuisson de la râclette, chaque alvéole assure, à la manière d'un four, une bonne uniformité de température en tous points de la coupelle du poêlon. De la manière usuelle on peut, pendant la cuisson de la râclette, disposer sur le plateau supérieur 24, par exemple dans un plat ou une assiette, des pommes de terre préalablement bouillies afin de les maintenir au chaud en vue de les consommer avec la râclette lorsque celle-ci sera prête à la dégustation.

Lorsque l'on désire préparer des crêpes, on verse la pâte liquide sur le plateau 24 puis on l'y étale, par exemple au moyen d'une réglette, sur toute la surface de la zone utile plane 38. Lorsque la pâte est figée, on retourne la crêpe ainsi obtenue afin de faire cuire son autre face.

Pendant la cuisson des crêpes, on peut également faire cuire, dans les coupelles placées à l'étage inférieur 22, non seulement de la râclette si on le désire, mais encore divers aliments destinés à garnir les crêpes, tels que des saucisses ou des oeufs.

Au lieu d'être utilisé pour la cuisson des crêpes, le plateau supérieur 24 peut aussi servir, non seulement pour faire griller des aliments, par exemple de la viande, par contact direct, mais encore pour faire cuire des aliments placés dans les poêlons 10 : ce mode d'utilisation est illustré à la figure 5, sur laquelle on observera que les six coupelles 12 peuvent être facilement disposées ensemble sur la zone plane 38 du plateau supérieur, le bord relevé 40 de ce plateau servant à faciliter leur mise en place et assurer leur maintien sur ladite zone plane.

## Revendications

1. Appareil électrique de cuisson comprenant, d'une part, une série de poêlons (10) formés chacun d'une coupelle (12) munie d'un manche (14) et, d'autre part, un boîtier (18) comportant deux étages de cuisson formés de deux plateaux horizontaux (22, 24) superposés espacés entre lesquels est disposée une résistance chauffante (26) à gaine tubulaire métallique s'étendant dans un plan horizontal, le plateau inférieur (22) étant monté fixe sur le boîtier (18) et étant adapté à recevoir lesdites poêlons (10) en position telle que leurs manches (14) fassent saillie du bord périphérique (32) de ce plateau inférieur (22) et que leurs coupelles (12) soient disposées sous ladite résistance (26), tandis que le plateau supérieur (24) est monté amovible et présente des faces supérieure (34) et inférieure (36) lisses, la gaine tubulaire de la résistance (26) étant maintenue dans ledit plan horizontal par des supports (44) fixés au plateau inférieur (22), caractérisé en ce que les supports (44) sont formés par une série de cloisons qui s'étendent, en hauteur, pratiquement sur tout l'espace entre les deux plateaux (22, 24) et, en longueur, de la région centrale de ces plateaux jusqu'au voisinage des bords périphériques (32, 40) de ces plateaux, formant ainsi entre elles des alvéoles destinées à recevoir les coupelles (12) des poêlons (10) et assurant un contact thermique direct entre la gaine tubulaire de la résistance (26) et la face inférieure (36) du plateau supérieur (24).

2. Appareil électrique de cuisson selon la revendication 1, caractérisé en ce que, la gaine tubulaire de la résistance (26) ayant un parcours comprenant au moins une spire disposée transversalement aux cloisons (44), ces cloisons présentent dans leur bord supérieur au moins une échancrure (48) qui reçoit cette gaine.

3. Appareil électrique de cuisson selon la revendication 2, caractérisé en ce qu'au moins un bord vertical (54) de l'échancrure (48) présente une encoche (52) orientée horizontalement dans laquelle est engagée une patte horizontale (50) solidaire de la gaine tubulaire de la résistance (26).

4. Appareil électrique de cuisson selon l'une quelconque des revendications 1 à 3, caractérisé en ce que, les plateaux (22, 24) étant circulaires, et les coupelles (12) des poêlons (10) présentant la forme générale de trapèzes s'inscrivant respectivement dans des secteurs égaux d'un même cercle, les cloisons (44) séparant les alvéoles sont disposées radialement.

5. Appareil électrique de cuisson selon la revendication 4, caractérisé en ce que, la face supérieure (34) du plateau supérieur (24) comprenant une zone centrale utile circulaire plane (38) entourée d'un bord périphérique relevé (40), ladite zone centrale (38) est sensiblement de même diamètre que le cercle dans lequel s'inscrivent les coupelles (12).

6. Appareil électrique de cuisson selon l'une quelconque des revendications précédentes, caractérisé en ce que, dans chaque alvéole de réception d'une coupelle (12) le plateau inférieur (22) présente des bossages espacés (33), sur les sommets desqueles repose ladite coupelle (12).

7. Appareil électrique de cuisson selon l'une quelconque des revendications précédentes, caractérisé en ce qu'un thermostat de limitation de température étant monté en série avec la résistance électrique (26), ce thermostat comporte un palpeur (62) qui est en contact avec la région centrale de la face inférieure (36) du plateau supérieur (24).

**Patentansprüche**

1. Elektrisches Kochgerät mit einerseits einer Gruppe von Pfännchen (10), die jedes in Form einer Schale (12) mit einem Stiel (14) ausgebildet sind, und andererseits einem Gehäuse (18), das zwei Kochetagen aufweist, die von zwei in Abstand übereinander angeordneten waagerechten Platten (22, 24) gebildet sind, zwischen denen ein Heizwiderstand (26) mit rohrförmigen Metallmantel angeordnet ist, der sich in einer waagerechten Ebene erstreckt, wobei die untere Platte (22) fest am Gehäuse (18) befestigt und zur Aufnahme der Pfännchen (10) in einer solchen Stellung, daß ihre Stiele (14) von Umfangsrand (32) dieser unteren Platte (22) nach außen vorstehen und daß ihre Schalen (12) unter dem Widerstand (26) angeordnet sind, eingerichtet ist, während die obere Platte (24) abnehmbar gehalten ist und eine glatte Oberseite (34) und glatte Unterseite (36) aufweist und der rohrförmige Mantel des Widerstands (26) in der waagerechten Ebene durch an der unteren Platte (22) befestigte Tragsäulen (44) gehalten ist, dadurch gekennzeichnet, daß die Tragsäulen (44) von einer Reihe von Wänden gebildet werden, die sich in der Höhe praktisch über den ganzen Raum zwischen den zwei Platten (22, 24) und in der Länge vom Mittelbereich dieser Platten bis in die Nähe der Umfangsränder (32, 40) dieser Platten erstrecken und so zwischen sich Zellen zur Aufnahme der Schalen (12) der Pfännchen (10) bilden und einen direkten Wärmekontakt zwischen dem rohrförmigen Mantel des Widerstands (26) und der Unterseite (36) der oberen Platte (24) bilden.

2. Elektrisches Kochgerät nach Anspruch 1, dadurch gekennzeichnet, daß der rohrförmige Mantel des Widerstands (26) einen Verlauf mit mindestens einer quer zu den Wänden (44) angeordneten Windung hat und diese Wände in ihrem oberen Rand mindestens einen Ausschnitt (48) aufweisen, welcher diesen Mantel aufnimmt.

3. Elektrisches Kochgerät nach Anspruch 2, dadurch gekennzeichnet, daß mindestens ein senkrechter Rand (54) des Ausschnitts (48) eine waagerechte gerichtete Ausnehmung (52) hat, in die ein mit dem rohrförmigen Mantel des Widerstands (26) fest verbundener waagerechter Fuß (50) eingreift.

4. Elektrisches Kochgerät nach einem der Ansprüche 1 bis 3, dadurch gekennzeichnet, daß die Platten (22, 24) kreisförmig sind und die Schalen (12) der Pfännchen (10) die allgemeine Form von Trapezen, die jeweils in gleiche Sektoren ein und desselben Kreises einbeschrieben sind, aufweisen und daß die die Zellen trennenden Wände (44) radial angeordnet sind.

5. Elektrisches Kochgerät nach Anspruch 4, dadurch gekennzeichnet, daß die Oberseite (34) der oberen Platte (24) einen nutzbaren ebenen kreisförmigen Mittelbereich (38), der von einem hochgezogenen Umfangsrand (40) umgeben ist, aufweist und daß der Mittelbereich (38) im wesentlichen den gleichen Durchmesser wie der Kreis hat, in den die Schalen (12) einbeschrieben sind.

6. Elektrisches Kochgerät nach einem der vorangehenden Ansprüche, dadurch gekennzeichnet, daß die untere Platte (22) in jeder Zelle zur Aufnahme einer Schale (12) in Abständen angeordnete Vorsprünge (33) aufweist, auf deren Spitzen die Schale (12) ruht.

7. Elektrisches Kochgerät nach einem der vorangehenden Ansprüche, dadurch gekennzeichnet, daß ein Thermostat zur Temperaturbegrenzung in Reihe mit dem elektrischen Widerstand (26) geschaltet ist und daß dieser Thermostat einen Fühler (62) aufweist, der in Berührung mit dem Mittelbereich der Unterseite (36) der oberen Platte (24) ist.

## Claims

1. Electrical cooking device comprising, on the one hand, a group of little pans (10) each being shaped like a tray (12) with a handle (14) and, on the other hand, a casing (18) including two cooking tiers constituted by two horizontal plates (22, 24) stacked upon each other in spaced relationship and having a heating resistance (26) with a tubular metallic jacket disposed therebetween and extending in a horizontal plane, wherein the bottom plate (22) is fixedly mounted on the casing (18) and is adapted to accommodate the little pans (10) in such a position that their handles (14) project from the outer periphery (32) of said bottom plate (22) towards the outside and that their trays (12) are disposed beneath said resistance (26), while the top plate (24) is detachably mounted and has a smooth upper surface (34) and a smooth lower surface (36), and the tubular jacket of the resistance (26) is supported in the horizontal plane by support members (44) secured to the bottom plate (22), characterized in that the support members (44) are formed by a series of walls which extend upwardly practically across the entire space between the two plates (22, 24) and extend lengthwise from the central region of these plates into the vicinity of the peripheral edges (32, 40) of these plates to form compartments therebetween for accommodating the trays (12) of the little pans (10) and providing for direct thermal contact between the tubular jacket of the resistance (26) and the lower surface (36) of the top plate (24).

2. Electrical cooking device as claimed in claim 1, characterized in that the tubular jacket of the resistance (26) extends with at least one coil disposed transversely to the walls (44) and that these walls in their upper edge are formed with at least one recess (48) for receiving said jacket.

3. Electrical cooking device as claimed in claim 2, characterized in that at least one vertical edge (54) of the recess (48) is formed with a horizontally directed notch (52) for engagement with a horizontal foot (50) fixedly mounted on the tubular jacket of the resistance (26).

4. Electrical cooking device as claimed in any of the claims 1 to 3, characterized in that the plates (22, 24) are circular and the trays (12) of the little pans (10) are of generally trapezoidal shape inscribed respectively in the same sectors of one and the same circle, and that the walls (44) separating the compartments are disposed radially.

5. Electrical cooking device as claimed in claim 4, characterized in that the upper surface (34) of the top plate (24) is provided with a utilizable plane circular central area (38) bordered by an elevated peripheral edge (40), and that the central area (38) has substantially the same diameter as the circle in which the trays (12) are inscribed.

6. Electrical cooking device as claimed in any of the preceding claims, characterized in that the bottom plate (22) includes spacedly disposed bosses (33) in each compartment for accommodating a tray (12), the tray resting on the tips of said bosses.

7. Electrical cooking device as claimed in any of the preceding claims, characterized in that a temperature-limiting thermocouple is connected in series to the electrical resistance (26), and that said thermocouple includes a sensor (62) which contacts the central area of the lower surface (36) of the top plate (24).

Fig 1

Fig 2

Fig 3

Fig 4

0 054 160

2

Fig 5